# EUROPEAN PATENT APPLICATION

(11) **EP 2 348 078 A1**
(43) Date of publication of application: **27.07.2011**
(21) Application number: 11151601.9
(22) Date of filing: 20.01.2011
(51) Int. Cl.: C09D 5/16, G01V 1/20, C23C 24/04

(54) **System and method for using copper coating to prevent marine growth on towed geophysical equipment**

(30) Priority: 21.01.2010 US 657467
(71) Applicant: PGS Geophysical AS, 1366 Lysaker (NO)
(72) Inventor: Harrick, Bruce William, Sugar Land Texas 77498 (US); Stenzel, Andre, Sugar Land Texas 77498 (US)
(74) Representative: Lord, Michael

(57) **Abstract**

A system comprises towed marine seismic equipment marine seismic equipment, adapted for towing through a body of water; and a coating of copper particles covering the marine seismic equipment to protect from marine growth. A method comprises towing marine seismic equipment having a coating of copper particles thereon to protect from marine growth.

## Description

### Field of the Invention

This invention relates generally to the field of geophysical prospecting. More particularly, the invention relates to the field of marine geophysical surveys with towed geophysical equipment.

### Description of the Related Art

In the oil and gas industry, geophysical prospecting is commonly used to aid in the search for and evaluation of subterranean formations. Geophysical prospecting techniques yield knowledge of the subsurface structure of the earth, which is useful for finding and extracting valuable mineral resources, particularly hydrocarbon deposits such as oil and natural gas. A well-known technique of geophysical prospecting is a seismic survey.

The resulting seismic data obtained in performing a seismic survey is processed to yield information relating to the geologic structure and properties of the subterranean formations in the area being surveyed. The processed seismic data is processed for display and analysis of potential hydrocarbon content of these subterranean formations. The goal of seismic data processing is to extract from the seismic data as much information as possible regarding the subterranean formations in order to adequately image the geologic subsurface. In order to identify locations in the Earth's subsurface where there is a probability for finding petroleum accumulations, large sums of money are expended in gathering, processing, and interpreting seismic data. The process of constructing the reflector surfaces defining the subterranean earth layers of interest from the recorded seismic data provides an image of the earth in depth or time. The image of the structure of the Earth's subsurface is produced in order to enable an interpreter to select locations with the greatest probability of having petroleum accumulations.

In a marine seismic survey, seismic energy sources are used to generate a seismic signal which, after propagating into the earth, is at least partially reflected by subsurface seismic reflectors. Such seismic reflectors typically are interfaces between subterranean formations having different elastic properties, specifically sound wave velocity and rock density, which lead to differences in acoustic impedance at the interfaces. The reflected seismic energy is detected by seismic sensors (also called seismic receivers) and recorded.

The appropriate seismic sources for generating the seismic signal in marine seismic surveys typically include a submerged seismic source towed by a ship and periodically activated to generate an acoustic wavefield. The seismic source generating the wavefield is typically an air gun or a spatially-distributed array of air guns.

The appropriate types of seismic sensors typically include particle velocity sensors (known in the art as geophones) and water pressure sensors (known in the art as hydrophones) mounted within a towed seismic streamer (also know as a seismic cable). Seismic sensors may be deployed by themselves, but are more commonly deployed in sensor arrays within the streamer.

Seismic sources, seismic streamers, and other attached equipment are towed behind survey vessels, attached by cables. The seismic sources and seismic streamers may be positioned in the water by attached equipment, such as deflectors and cable positioning devices (also known as "birds").

Another technique of geophysical prospecting is an electromagnetic survey. Electromagnetic sources and receivers include electric sources and receivers (often grounded electrodes or dipoles) and magnetic sources and receivers (often wire multi-loop). The electric and magnetic receivers can include multi-component receivers to detect horizontal and vertical electric signal components and horizontal and vertical magnetic signal components. In some electromagnetic surveys, the sources and receivers are towed through the water, possibly along with other equipment.

Unfortunately, marine organisms adhere to and then grow on nearly everything that moves through water for significant periods of time, including towed geophysical equipment. Marine growth is often pictured in terms of barnacles, but also includes the growth of mussels, oysters, algae, tubeworms, slime, and other marine organisms.

In the past, wooden-hulled ships were once covered with lead, copper, and other metals to thwart marine growth. In addition, pitch, oils and gums, pesticides, silicones, and arsenic have been tried, although none has completely solved the problem. In more recent times, hulls have been painted with toxic paints, although today, such environmentally harmful products are facing tough regulation.

Marine growth results in lost production time required to clean the towed geophysical equipment. In addition, marine growth speeds corrosion, requiring quicker replacement of equipment, and increases drag resistance, leading to increased fuel costs. Thus, the elimination, or the reduction, of barnacle growth will have a major beneficial effect on the cost of marine geophysical surveying.

Currently, marine growth presents a significant problem for a geophysical vessel operation due to downtime caused by a need for its removal, equipment damage, substandard seismic data quality, increased fuel consumption, and exposure of the crew to dangers associated with a streamer cleaning operations.

Thus, a need exists for a system and a method for protecting towed geophysical equipment in marine geophysical surveys, especially towed streamers and equipment attached thereto, from marine growth. A need also exists for a system and method for reducing drag resistance on the towed geophysical equipment.

### BRIEF SUMMARY OF THE INVENTION

The invention is a system and a method for protecting towed marine geophysical equipment from marine growth. In one embodiment, the invention is a system comprising marine geophysical equipment adapted for towing through a body of water and a coating of copper particles covering the marine geophysical equipment. In another embodiment, the invention is a method comprising towing marine geophysical equipment having a coating of copper particles thereon.

### BRIEF DESCRIPTION OF THE DRAWINGS

The invention and its advantages may be more easily understood by reference to the following detailed description and the attached drawings, in which:

**FIG. 1** is a schematic plan view of marine seismic survey equipment used with towed streamers;

**FIG. 2** is a schematic side view of marine seismic survey equipment used with towed streamers;

**FIG. 3** is a schematic plan view of seismic equipment attached to a seismic streamer, protected from marine growth by the invention; and

**FIG. 4** is a schematic side view of seismic equipment attached under a seismic streamer, protected from marine growth by the invention.

While the invention will be described in connection with its preferred embodiments, it will be understood that the invention is not limited to these. On the contrary, the invention is intended to cover all alternatives, modifications, and equivalents that may be included within the scope of the invention, as defined by the appended claims.

### DETAILED DESCRIPTION OF THE INVENTION

Marine growth is a problem for anything that is submerged in or moves through sea water for significant periods of time, including towed seismic equipment. It has been seen in the past and with currently conducted tests that copper has anti-fouling properties against marine growth when submerged in sea water.

The invention is a system and method for application of a coating of copper particles, or particles of an alloy containing a significant amount of copper, to surfaces of towed geophysical equipment components. The copper coating will greatly reduce or perhaps even eliminate problems associated with marine growth. Since marine fouling initiates on components containing grooves, crevices and rough finish, such as connectors, ballast blocks, and depth control devices, applying a coating containing sufficient copper to the surfaces of these components will produce an anti-fouling treatment.

In one embodiment of the invention, metal cold spraying technology and available equipment is utilized to apply a desired surface coating to geophysical equipment made with either metal or plastic. The invention is not limited to cold spray technology. Other methods for applying copper containing coatings are applicable in the invention. These other methods include, but are not limited to, gas plasma. A surface treatment is applied either as a last step of a manufacturing process of a component or applied over a completed assembly. Since tools for metal cold spraying are portable, this technology can be also utilized to treat equipment that is already installed on geophysical prospecting vessels.

In the case of a towed marine streamer, one embodiment includes the spraying equipment in an enclosed cowl that fits around the streamer cable and is attached to an existing guide sheave to move with the cable as the vessel rocks. Copper or copper alloy particles are applied directly over the deployed streamer in desired areas and a suction pump can be employed to extract surplus particles to prevent buildup and leakage into the surrounding air. In another embodiment, the entire streamer jacket is coated. In another embodiment, the streamer jacket is sparsely coated with the copper or copper alloy particles. In a particular embodiment, the cable skin, typically polyurethane, is manufactured containing particles of copper or copper alloy.

The cold spray process impinges a particle-laden gas jet on a solid surface at a high velocity to form a coating. Cold spray uses a high pressure, high velocity gas jet to impart the velocity for the coating particles. A high-pressure gas jet, possibly preheated to compensate for the adiabatic cooling due to expansion, is expanded through a nozzle to form a supersonic gas jet. Powder particles, transported by a carrier gas, are injected into this gas jet. Momentum transfer from the supersonic gas jet to the particles results in a high velocity particle jet. These powder particles, on impact onto the substrate surface, plastically deform and adhere to the substrate and to one another to form an overlay deposit, resulting in a coating.

Although the gas may be heated, the temperatures involved in the cold spray process are much lower than in conventional thermal spray processes. Cold spray can be used to produce dense, pure, thick, and well bonded protective coatings of metals, alloys, and composites. In particular, the cold spray process can be used to cover towed geophysical equipment with a protective copper coating.

This copper coating prevents settlement of the invertebrate larvae that cause marine growth. Thus, cold spraying (or other application methods) of copper or copper alloy onto surfaces of towed geophysical equipment, comprising streamer jackets along with all associated hardware and peripheral devices, will prevent or reduce invertebrate settlement. Reduction of marine growth on marine towed geophysical equipment will result in several advantages, including the following.

The reduction of marine growth will reduce eddy formation at the surfaces of the towed equipment, bringing about a consequent reduction of noise caused by the turbulent flow. The quieter towing will improve the signal-to-noise ratio, a great benefit in geophysical surveying. The reduction of marine growth provides more accurate and consistent positioning of streamers, also a great benefit in seismic surveying.

The reduction of marine growth will reduce drag on the towed streamer, allowing the equipment to be towed through the water with higher energy efficiency. This higher efficiency could produce a reduction in fuel costs for the same survey configuration. Alternatively, the higher efficiency could allow greater towing capacity (such as an increase in the number of streamers, the length of each streamer, or the towing spread) at the current fuel costs and towing power of the seismic vessel.

The reduction of marine growth will reduce production time lost to cleaning or replacing towed geophysical equipment. This will also reduce work boat and cleaning equipment exposure hours for the crew. The reduction of marine growth will reduce the wear and extend the operational life of the towed geophysical equipment. All of these effects will increase the return on initial investment.

Regardless of the application method used (cold spray, gas plasma, or other), copper particle density is adjusted to produce a protective coating that is most effective at providing the advantages discussed above and, at the same time, most suitable for the seismic cable application. The copper coating should not be so thick as to interfere with the acoustic properties of sensors in the streamers, such as hydrophones and geophones.

The invention is a system and a method for protecting towed marine geophysical equipment from marine growth. Consequently, the invention is also system and a method for reducing drag on the towed marine geophysical equipment. The following discussion of the invention will be illustrated in terms of towed seismic streamers, but this is not a limitation of the invention. Any form of geophysical equipment that can and is towed through the water and is vulnerable to marine growth is considered appropriate for application of the present invention. For example, the invention can be applied to towed seismic source arrays.

Further, any form of equipment that can and is towed through the water and used in electromagnetic (including natural source magnetotelluric) prospecting is also appropriate for application of the present invention. For example, the invention can be applied to towed marine equipment including, but is not limited to, arrays of electromagnetic sources and receivers.

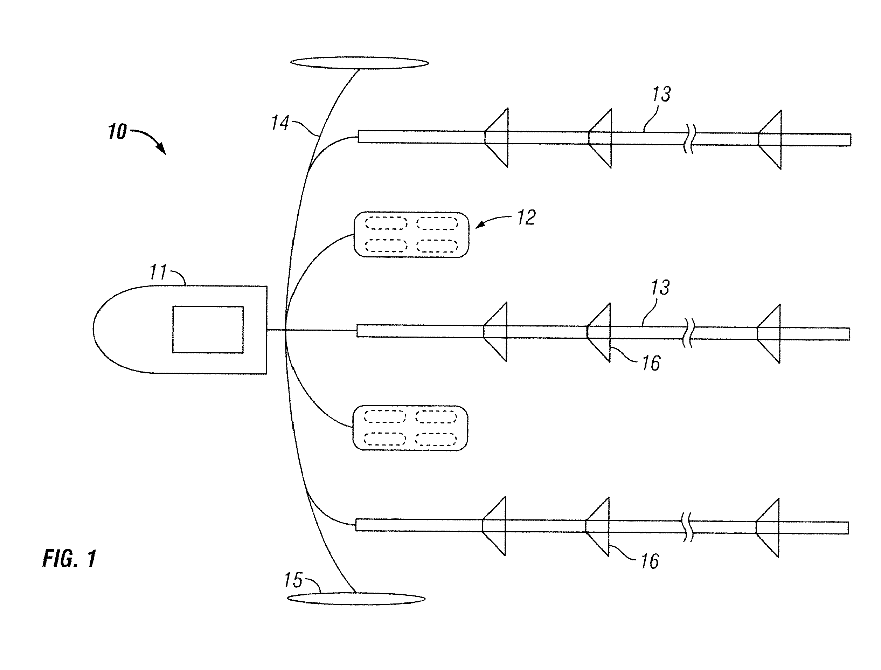

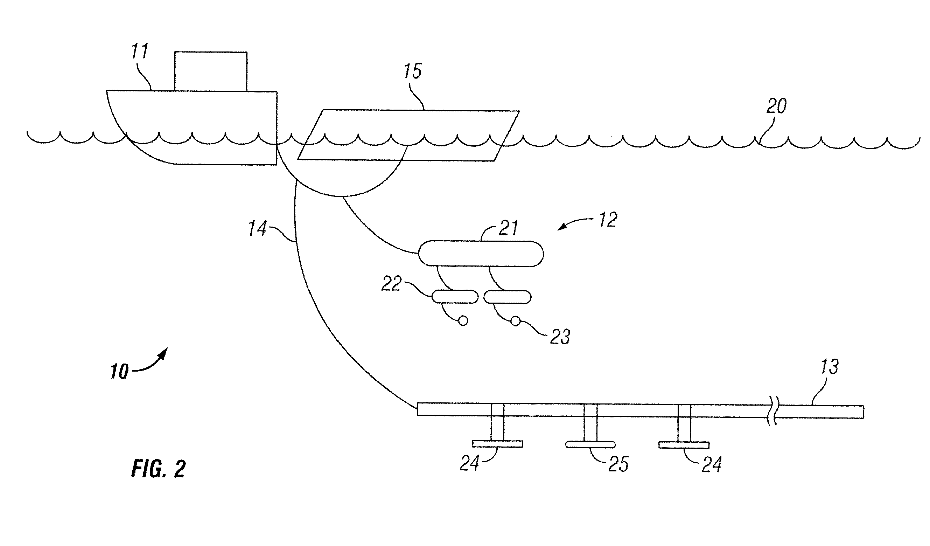

**FIGS. 1** and **2** show the typical types of towed marine seismic equipment that can be protected from marine growth by various embodiments of the apparatus and method of the invention. **FIG. 1** is a schematic plan view (not drawn to scale) of marine seismic survey equipment that could be used with towed streamers.

The towed marine seismic equipment is generally designated by reference numeral **10.** A seismic vessel **11** tows seismic sources **12** and seismic streamers **13.** Although only two seismic sources **12** and three seismic streamers **13** are shown, this number is just for illustrative purposes only. Typically, there can be more seismic sources **12** and many more seismic streamers **13.** The seismic sources **12** and the seismic streamers 13 are connected to the seismic vessel **11** by cables **14.** The cables **14** are typically further connected to devices such as deflectors **15** that spread apart the seismic streamers **13.** **FIG. 1** shows that the seismic streamers **13** may have equipment attached inline or around the streamers **13.** The attached equipment can be, by way of example, in-line mounted position control devices **16,** such as depth control devices or lateral control devices , as well as acoustic units and retriever units (not shown). The attached equipment also can be, by way of example, sensors of various types, such as depth sensors.

**FIG. 2** is a schematic side view (not drawn to scale) of marine seismic survey equipment, including towed streamers. The side view in **FIG. 2** corresponds to the plan view of the towed marine seismic equipment shown in **FIG. 1****.**

The seismic vessel **11** tows seismic sources **12** and seismic streamers **13** under the water surface **20.** The seismic sources **12** primarily comprise floats **21** and air guns **22,** but may also have equipment such as, for example, near-field sensors (hydrophones) **23** attached adjacent the air guns **22.** **FIG. 2** shows that the seismic streamers **13** may have additional equipment attached below the streamers **13.** The attached equipment can be, by way of example, suspended position control devices **24** and suspended sensors **25,** as well as acoustic units and retriever units (not shown).

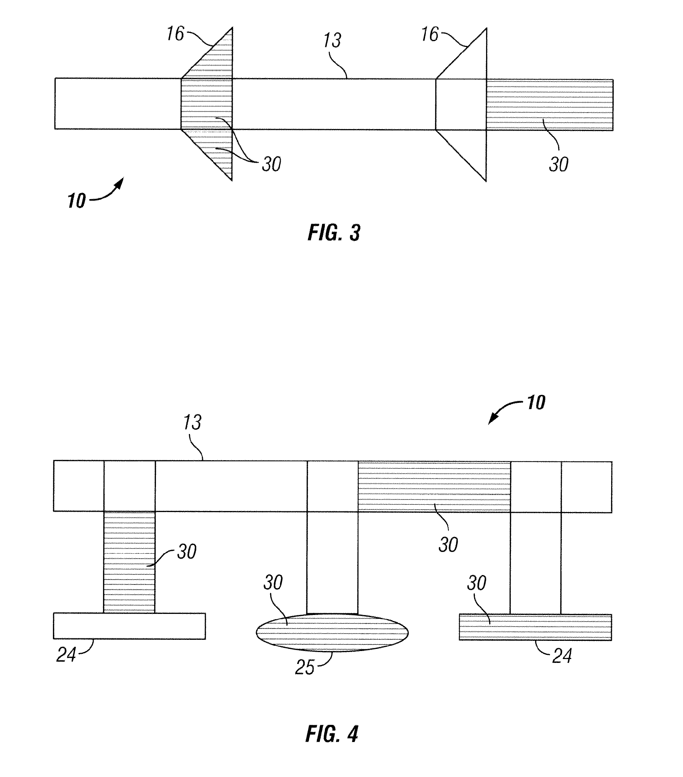

**FIGS. 3** and **4** show close-up views of the seismic equipment attached to the seismic streamer in **FIGS. 1** and **2****,** respectively. **FIG. 3** is a schematic plan view (not drawn to scale) of seismic equipment attached to a seismic streamer, protected from marine growth by the invention.

A copper coating **30,** comprising a coating of copper or copper alloy particles, covers the towed marine seismic equipment **10.** In one embodiment, the copper coating **30** is shown covering a portion of the inline position control devices **16** or the seismic streamer **13.** These configurations of the copper coating **30** shown here in **FIGS. 3** a nd **4** are for illustrative purposes only and are not meant to limit the invention. The copper coating **30** of the invention can be configured in any appropriate manner and applied in any appropriate manner to cover any appropriate portion of the towed marine seismic equipment **10.**

**FIG. 4** is a schematic side view (not drawn to scale) of seismic equipment attached under a seismic streamer, protected from marine growth by the invention. As in **FIG. 3** above, the copper coating **30** is shown covering the towed marine seismic equipment **10.** The copper coatings **30** are shown covering appropriate portions of the suspended position control devices **24,** suspended sensors **25** or seismic streamers **13.** Other configurations of the copper coating **30** are possible and compatible with the invention.

It should be understood that the preceding is merely a detailed description of specific embodiments of this invention and that numerous changes, modifications, and alternatives to the disclosed embodiments can be made in accordance with the disclosure here without departing from the scope of the invention. The preceding description, therefore, is not meant to limit the scope of the invention. Rather, the scope of the invention is to be determined only by the appended claims and their equivalents.

## Claims

1. A system for protecting towed marine geophysical equipment from marine growth, comprising:
marine geophysical equipment, adapted for towing through a body of water; and
a coating of copper particles covering the marine geophysical equipment.

2. The system of claim **1,** wherein the marine geophysical equipment comprises towed marine seismic streamers.

3. The system of claim **2,** wherein the marine geophysical equipment further comprises additional equipment attached to the marine seismic streamers.

4. The system of claim **1,** wherein the marine geophysical equipment comprises marine seismic sources.

5. The system of claim **1,** wherein the marine geophysical equipment comprises electromagnetic receivers.

6. The system of claim **1,** wherein the marine geophysical equipment comprises electromagnetic sources.

7. The system of claim **1,** wherein the coating of copper particles is applied to the marine geophysical equipment by a cold spray process of particles from a group containing copper and copper alloys.

8. The system of claim **1,** wherein the coating of copper particles is applied to the marine geophysical equipment by a gas plasma process.

9. The system of claim **2,** wherein the coating of copper particles covers the marine geophysical streamers by manufacturing streamer skin containing particles from a group containing copper and copper alloys.

10. A method for protecting marine geophysical equipment from marine growth, comprising:
towing marine geophysical equipment having a coating of copper particles thereon.

11. The method of claim **10,** wherein the marine geophysical equipment comprises towed marine seismic streamers.

12. The method of claim **11,** wherein the marine geophysical equipment further comprises additional equipment attached to the marine seismic streamers.

13. The method of claim **10,** wherein the marine geophysical equipment comprises marine seismic sources.

14. The method of claim **10,** wherein the marine geophysical equipment comprises electromagnetic receivers.

15. The method of claim **10,** wherein the marine geophysical equipment comprises electromagnetic sources.

16. The method of claim **10,** wherein the coating of copper particles is applied to the marine geophysical equipment by a cold spray process of particles from a group containing copper and copper alloys.

17. The method of claim **10,** wherein the coating of copper particles is applied to the marine geophysical equipment by a gas plasma process.

18. The system of claim **11,** wherein the coating of copper particles covers the marine geophysical streamers by manufacturing streamer skin containing particles from a group containing copper and copper alloys.
